(19) Europäisches Patentamt
European Patent Office
Office européen des brevets

(11) **EP 2 423 452 B1**

(12) **FASCICULE DE BREVET EUROPEEN**

(45) Date de publication et mention
de la délivrance du brevet:
**05.12.2012 Bulletin 2012/49**

(51) Int Cl.:
***F01D 21/14*** *(2006.01)*  ***F02C 9/00*** *(2006.01)*
***F02C 9/28*** *(2006.01)*

(21) Numéro de dépôt: **11005679.3**

(22) Date de dépôt: **12.07.2011**

(54) **Procédé et dispositif pour optimiser l'utilisation d'un moteur**

Verfahren und Vorrichtung zur Optimierung des Einsatzes eines Motors

Method and device for optimising the use of a motor

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.08.2010 FR 1003478**

(43) Date de publication de la demande:
**29.02.2012 Bulletin 2012/09**

(73) Titulaire: **EUROCOPTER**
**13725 Marignane Cédex (FR)**

(72) Inventeur: **Dyrla, Frédéric**
**13320 Bouc Bel Air (FR)**

(74) Mandataire: **GPI & Associés**
**EuroParc de Pichaury**
**Batiment B2 - 1er Etage**
**1330 Rue Guillibert de la Lauzière**
**13856 Aix en Provence Cedex 3 (FR)**

(56) Documents cités:
**EP-A1- 1 741 901       WO-A1-94/10619**
**DE-C1- 4 125 372       FR-A1- 2 878 288**

## Description

La présente invention concerne un procédé et un dispositif pour optimiser l'utilisation d'un moteur, un moteur d'un aéronef de type giravion notamment.

La plupart des giravions construits actuellement sont équipés d'un ou deux turbomoteurs à turbine libre. La puissance est alors prélevée sur une turbine basse pression, dénommée « turbine libre », laquelle est mécaniquement indépendante de l'ensemble du compresseur et de l'étage haute pression, comprenant notamment une turbine haute pression, du turbomoteur. La turbine libre d'un turbomoteur ayant généralement une vitesse de rotation comprise entre 20 000 et 50 000 tours par minute, une boîte de réduction de vitesse est nécessaire pour la liaison au rotor principal du giravion dont le régime de rotation est sensiblement compris entre 200 et 400 tours par minute: il s'agit de la boîte de transmission principale de puissance.

Les limitations thermiques d'un turbomoteur, et les limitations en couple d'une boîte de transmission principale, permettent de définir une enveloppe de performances englobant deux régimes normaux d'utilisation d'un turbomoteur agencé sur un giravion monomoteur ou bimoteur:

- le régime de décollage correspondant à un niveau de couple pour la boîte de transmission et un échauffement du turbomoteur admissibles pendant un temps limité sans dégradation notable : c'est la puissance maximale au décollage, dénommée PMD par l'homme du métier, utilisable pendant une durée en continu de cinq minutes par exemple et pendant une durée cumulée de trente minutes au cours d'une même mission,

- le régime maximal continu pendant lequel, à aucun moment, ne sont dépassées ni les possibilités de la boîte de transmission, ni celles résultant de l'échauffement maximal admissible en continu devant les aubes à haute pression du premier étage de la turbine : c'est la puissance maximale en continu, dénommée PMC par l'homme du métier, utilisable sans limite de temps et correspondant environ à 90% de la PMD,

Sur un giravion bimoteur, l'enveloppe de performances englobe aussi des régimes de surpuissance d'urgence, uniquement utilisés lorsque l'un des deux turbomoteurs est en panne :

- le premier régime d'urgence pendant lequel les possibilités de la boîte de transmission sur les étages d'entrée et les possibilités thermiques du turbomoteur sont utilisées au maximum : on parle de puissance de super urgence égale à environ 112% à 120% de la PMD, dénommée PSU par l'homme du métier, utilisable pendant une durée en continu de trente secondes consécutives au maximum par exemple, et ce trois fois pendant un vol. L'utilisation de la PSU entraîne la dépose et la révision du turbomoteur;

- le deuxième régime d'urgence pendant lequel les possibilités de la boîte de transmission sur les étages d'entrée et les possibilités du turbomoteur sont largement utilisées : on parle alors de puissance maximale d'urgence égale à environ 105% à 110% de la PMD, dénommée PMU ou OE12' par l'homme du métier, utilisable pendant deux minutes consécutives par exemple,

- le troisième régime d'urgence pendant lequel les possibilités de la boîte de transmission sur les étages d'entrée et les possibilités thermiques du turbomoteur sont utilisées sans endommagement : on parle de puissance intermédiaire d'urgence, égale à la PMD et dénommée PIU ou OEI voire OEIcontinu par l'homme du métier, utilisable en continu pour le reste du vol après la panne du turbomoteur.

Par conséquent, les contraintes thermiques et mécaniques et surtout le phénomène de fluage des aubes de turbine entraînent une dégradation du turbomoteur, plus ou moins importante selon les régimes. Pour garantir la sécurité du vol et l'obtention des performances, il est alors impératif de déterminer l'endommagement maximal acceptable pour un turbomoteur.

Par suite, on évalue le potentiel global d'utilisation du turbomoteur. Cela revient concrètement à définir un nombre d'heures de vol maximal, dénommé TBO (« *Time Between Overhaul* » en langue anglaise) par l'homme du métier, que le turbomoteur est capable d'effectuer à compter de sa dernière révision ou de sa première utilisation, suivant le cas dans lequel on se trouve. Une fois ce TBO atteint, le turbomoteur est déposé puis révisé.

Dans la suite du texte et par commodité, on entendra par « dernière révision du turbomoteur » soit la première utilisation du turbomoteur soit effectivement la dernière révision de ce dernier.

Par ailleurs, afin d'obtenir une autorisation de vol dans un pays déterminé pour un giravion, il est requis que l'enveloppe de performances ainsi que le TBO du ou des turbomoteurs du giravion soient certifiés par les services officiels du pays considéré pour un spectre d'utilisation précis. Cette autorisation ne survient donc qu'à l'issue d'essais de certification complets mais onéreux.

Ces essais de certification complets d'un turbomoteur étant réalisés pour justifier une enveloppe de performances associée à un TBO, il n'est pas possible d'utiliser le turbomoteur selon une enveloppe de performances différente de l'enveloppe de performances initialement autorisée, sans réaliser des essais de certification complets très onéreux.

En outre, lorsque le moteur développe une puissance intermédiaire comprise entre la puissance maximale en continu PMC et la puissance maximale au décollage PMD, cette puissance intermédiaire est soumise à la même limitation que cette puissance maximale au décollage.

De même, lorsque le moteur développe une puissance comprise entre la puissance intermédiaire d'urgence et la puissance maximale d'urgence, cette puissance est traitée de la même manière que la puissance maximale d'urgence en étant soumise à la même limitation que cette puissance maximale d'urgence.

Dès lors, l'exploitation du turbomoteur ne parait pas optimisée du fait de l'étagement discret des régimes du moteur.

L'état de la technique antérieur inclut le document FR2878288 qui propose de modifier le nombre d'heures de vol maximal pour optimiser l'utilisation de ce moteur.

Par ailleurs, le document FR2888287 permet de définir une enveloppe de performances alternative à l'enveloppe de performances initiale du moteur.

La présente invention a alors pour objet de proposer un procédé et un dispositif permettant d'optimiser l'utilisation d'un moteur.

L'invention concerne alors un procédé pour optimiser l'utilisation d'une installation motrice pour aéronef munie d'au moins un moteur fonctionnant selon une enveloppe de performances englobant au moins un premier régime et un deuxième régime, ce premier régime présentant une première puissance utilisable selon un premier intervalle de temps prédéterminé , le deuxième régime présentant une deuxième puissance supérieure à la première puissance, la deuxième puissance étant utilisable selon un deuxième intervalle de temps prédéterminé en continu.

Ce procédé est notamment remarquable en ce que l'on détermine et on affiche, sous la forme d'un compte à rebours par exemple, une première durée d'utilisation possible en continu de la deuxième puissance lorsque le moteur développe une troisième puissance d'une part supérieure à la première puissance et d'autre part inférieure ou égale à la deuxième puissance, la première durée d'utilisation s'écoulant à une vitesse variable dépendant de ladite troisième puissance.

Pour un aéronef appliquant ce procédé, le procédé n'implique pas une modification du nombre d'heures de vol maximal TBO pour lequel le moteur est certifié.

De plus, dans le cadre d'un moteur d'aéronef, un giravion par exemple, le procédé est compatible avec les règles de certification en vigueur dans la mesure où il affiche la première durée d'utilisation possible de la deuxième puissance certifiée. Le manuel de vol de l'aéronef n'est donc pas impacté.

Selon l'état de la technique, lorsque le moteur développe une troisième puissance, on considère que le moteur fonctionne au deuxième régime utilisable durant le deuxième intervalle de temps.

Selon l'invention, on indique au pilote une première durée d'utilisation possible de la deuxième puissance de ce deuxième régime, cette première durée d'utilisation s'écoulant à une vitesse variable distincte de la vitesse d'écoulement du temps définie par le système international de mesure du temps. Cette première durée d'utilisation est alors un premier compteur diminuant pour que le pilote estime la durée d'utilisation restante de la deuxième puissance.

Ainsi, une seconde de la première durée d'utilisation est supérieure ou égale à la seconde définissant l'unité de temps dudit système international de mesure du temps.

En effet, lorsque la troisième puissance est inférieure à la deuxième puissance, l'utilisation de cette troisième puissance est de fait moins endommageante pour le moteur que l'utilisation de la deuxième puissance. Le deuxième intervalle de temps peut alors être augmenté, cette augmentation étant représenté par une première durée d'utilisation de la deuxième puissance s'écoulant moins rapidement que le temps réel.

Ainsi, l'invention permet d'utiliser une troisième puissance inférieure à la deuxième puissance pendant un temps supérieur au deuxième intervalle de temps. Ce procédé revient à créer un nouveau régime défini par la troisième puissance et un troisième intervalle de temps, sans avoir à modifier le manuel de vol.

Par suite, la première puissance étant la puissance maximale en continu PMC et la deuxième puissance étant la puissance maximale au décollage PMD, on peut par exemple effectuer un vol stationnaire ou un vol avec un taux de montée important à l'aide d'un giravion en développant une puissance du moteur comprise entre la première puissance PMC et la deuxième puissance PMD pendant un temps supérieur au deuxième intervalle de temps.

De même, sur un giravion bimoteur, on peut utiliser un régime d'urgence compris entre le deuxième régime et le troisième régime d'urgence durant un temps optimisé pour sortir d'une situation délicate.

Par ailleurs, le procédé peut comporter une ou plusieurs des caractéristiques additionnelles qui suivent.

Par exemple, pour déterminer la première durée d'utilisation :

- lors d'une phase préparatoire, on peut établir une courbe de détérioration d'un moteur fournissant un coefficient de détérioration du moteur en fonction de la valeur d'un paramètre de surveillance de ce moteur, tel que la température des gaz à l'entrée de la turbine libre sur un turbomoteur à turbine libre, et on établit un endommagement total provoqué par une utilisation de la deuxième puissance durant le deuxième intervalle de temps, cet endommagement total étant égal au produit du deuxième intervalle de temps et d'un coefficient de détérioration ciblé déterminé à l'aide de ladite courbe en utilisant la valeur du paramètre de surveillance atteinte lorsque le moteur développe la deuxième puissance,

- en temps réel durant le vol, on établit et on mémorise le coefficient de détérioration courant du moteur, la première durée d'utilisation $\Delta T$ à chaque instant courant étant obtenue à l'aide de la première relation suivante :

$$\Delta T = \frac{EP2 - \int_{T0}^{TPS} K(t).\delta t}{K2}$$

Où :

- K2 représente ledit coefficient de détérioration ciblé,

- EP2 représente ledit endommagement total,

- $\int_{T0}^{TPS} K(t).\delta t$ représente l'intégrale du coefficient de détérioration courant K(t) en fonction du temps pris entre un premier instant T0 correspondant au passage de la première puissance vers la troisième puissance et ledit instant courant TPS.

On comprend que la première durée d'utilisation est réinitialisée à l'issue de l'utilisation de la troisième puissance au démarrage de l'installation motrice, et aussi à chaque passage par la première puissance vers la troisième puissance (compteur de temps non cumulé et réinitialisé à chaque excursion).

De plus, plus la troisième puissance se rapproche de la deuxième puissance, plus la première durée d'utilisation s'écoule rapidement.

Lorsque la troisième puissance est inférieure à la deuxième puissance, une seconde de la première durée d'utilisation est supérieure à l'unité de mesure du temps du système international.

Par contre, lorsque la troisième puissance est égale à la deuxième puissance, la première durée d'utilisation s'écoule à la même vitesse que le temps réel, une seconde de la première durée d'utilisation étant égale à l'unité de mesure du temps du système international.

Par ailleurs, l'installation motrice ayant deux moteurs et la première durée d'utilisation étant déterminée pour chaque moteur, on peut afficher la première durée d'utilisation la plus faible entre la première durée d'utilisation du premier moteur et la première durée d'utilisation du deuxième moteur.

Selon un autre aspect, on peut déclencher une alerte quand la première durée d'utilisation devient inférieure à un premier seuil prédéterminé pour attirer l'attention d'un opérateur d'un véhicule muni de l'invention, une alarme sonore ou visuelle par exemple.

Selon un autre aspect, on peut déterminer et afficher, sous la forme d'un compte à rebours par exemple, une deuxième durée d'utilisation possible en continu d'une troisième puissance développée à un instant courant, la troisième puissance étant d'une part supérieure à la première puissance et d'autre part inférieure ou égale à la deuxième puissance, la deuxième durée d'utilisation s'écoulant à une vitesse variable dépendant de ladite troisième puissance.

Ainsi, on peut savoir pendant combien de temps on peut utiliser cette troisième puissance sans impact sur la durée de vie du moteur.

Pour déterminer la deuxième durée d'utilisation :

- lors d'une phase préparatoire, on établit une courbe de détérioration du moteur fournissant un coefficient de détérioration du moteur en fonction de la valeur d'un paramètre de surveillance de ce moteur, et on établit un endommagement total provoqué par une utilisation de la deuxième puissance durant le deuxième intervalle de temps, cet endommagement total étant égal au produit du deuxième intervalle de temps et d'un coefficient de détérioration ciblé déterminé à l'aide de la courbe de détérioration en utilisant la valeur du paramètre de surveillance atteinte lorsque le moteur développe la deuxième puissance,

- en temps réel durant le vol, on établit et on mémorise le coefficient de détérioration courant du moteur, la deuxième durée d'utilisation à chaque instant courant étant obtenue à l'aide de la deuxième relation suivante :

$$\Delta T' = \frac{EP2 - \int_{T0}^{TPS} K(t).\delta t}{K(TPS)}$$

Où :

- $K(TPS)$ représente ledit coefficient de détérioration à l'instant courant,

- EP2 représente ledit endommagement total,

- $\int_{T0}^{TPS} K(t).\delta t$ représente l'intégrale du coefficient de détérioration courant K(t) en fonction du temps pris entre un premier instant T0 correspondant au passage de la première puissance vers la troisième puissance et ledit instant courant TPS.

On comprend que la deuxième durée d'utilisation est réinitialisée à l'issue de l'utilisation de la troisième puissance au démarrage de l'installation motrice.

Cette deuxième durée d'utilisation est alors un deuxième compteur s'écoulant pour que le pilote estime la durée d'utilisation restante de la troisième puissance.

En outre, l'installation motrice ayant deux moteurs et la deuxième durée d'utilisation étant déterminée pour chaque moteur, on peut afficher la deuxième durée d'utilisation la plus faible entre la deuxième durée d'utilisation du premier moteur et la deuxième durée d'utilisation du deuxième moteur.

Selon un autre aspect, on peut déclencher une alerte quand la deuxième durée d'utilisation devient inférieure à un deuxième seuil donné pour attirer l'attention d'un opérateur d'un véhicule muni de l'invention, une alarme sonore ou visuelle par exemple.

Selon un autre aspect, la deuxième puissance pouvant être utilisée pendant un temps cumulé TC2, supérieur au deuxième intervalle de temps mais dont chaque période d'utilisation en continu ne peut excéder ce deuxième intervalle de temps, on détermine et on affiche sous la forme d'un compte à rebours par exemple une troisième durée d'utilisation possible en temps cumulée et discontinu de ladite deuxième puissance lorsque le moteur développe au cours d'une utilisation courante une troisième puissance d'une part supérieure à la première puissance et d'autre part inférieure ou égale à la deuxième puissance, ladite troisième durée d'utilisation étant déterminé :

- lors d'une phase préparatoire, on peut établir une courbe de détérioration d'un moteur fournissant un coefficient de détérioration du moteur en fonction de la valeur d'un paramètre de surveillance de ce moteur, et on établit un endommagement global provoqué par une utilisation de la deuxième puissance durant un temps cumulé TC2, cet endommagement global étant égal au produit du temps cumulé TC2 et d'un coefficient de détérioration ciblé déterminé à l'aide de ladite courbe en utilisant la valeur du paramètre de surveillance atteinte lorsque le moteur développe la deuxième puissance,

- à l'issue de chaque utilisation en continu durant une durée intermédiaire d'utilisation de la troisième puissance, on mémorise un endommagement intermédiaire $E_i$ déterminée à l'aide de l'intégrale suivante du coefficient de détérioration K(t) en fonction du temps durant ladite durée intermédiaire :

$$Ei = \int_{0}^{di} K(t).\delta t$$

- en temps réel durant le vol, on établit et on mémorise le coefficient de détérioration courant du moteur, la troisième durée d'utilisation $\Delta T''$ à chaque instant courant étant obtenue à l'aide de la troisième relation suivante :

$$\Delta T'' = \frac{EPC2 - \left[\sum_{i=1}^{n-1} Ei + \int_{T0}^{TPS} K(t).\delta t\right]}{K2}$$

où :

- K2 représente ledit coefficient de détérioration ciblé,

- EPC2 représente ledit endommagement global,

- $\sum_{i=1}^{n-1} Ei$ représente le cumul des endommagements intermédiaires mémorisés lors des utilisations de la troisième puissance précédant l'utilisation courante,

- $\int_{T0}^{TPS} K(t).\delta t$ représente l'intégrale du coefficient de détérioration courant K(t) en fonction du temps pris entre un premier instant T0 correspondant au passage de la première puissance vers la troisième puissance lors de l'utilisation courante et ledit instant courant TPS.

On comprend que l'endommagement intermédiaire et la troisième durée d'utilisation $\Delta T''$ sont réinitialisés au démarrage de l'installation motrice.

Outre un procédé, l'invention vise un moyen de pilotage appliquant ce procédé.

Selon l'invention, un moyen de pilotage d'une installation motrice pour aéronef munie d'au moins un moteur d'aéronef fonctionnant selon une enveloppe de performances englobant au moins un premier régime et un deuxième régime, ledit premier régime présentant une première puissance utilisable selon un premier intervalle de temps prédéterminé, ledit deuxième régime présentant une deuxième puissance supérieure à ladite première puissance, la deuxième puissance étant utilisable selon un deuxième intervalle de temps prédéterminé en continu, la deuxième puissance pouvant également être utilisable sur un intervalle de temps cumulé supérieur au deuxième intervalle de temps mais dont chaque période d'utilisation doit être inférieure à ce deuxième intervalle de temps, est notamment remarquable en ce qu'il comporte :

- un moyen de détermination d'une première durée d'utilisation possible en continu de la deuxième puissance lorsque le moteur développe une troisième puissance d'une part supérieure à la première puissance et d'autre part inférieure ou égale à la deuxième puissance, le moyen de détermination déterminant la première durée d'utilisation :

  o à l'aide d'une courbe de détérioration d'un moteur fournissant un coefficient de détérioration du moteur en fonction de la valeur d'un paramètre de surveillance de ce moteur, et d'un endommagement total provoqué par une utilisation de la deuxième puissance durant le deuxième intervalle de temps, cet endommagement total étant égal au produit du deuxième intervalle de temps et d'un coefficient de détérioration ciblé déterminé à l'aide de ladite courbe en utilisant la valeur dudit paramètre de surveillance atteinte lorsque le moteur développe la deuxième puissance,

  o en temps réel durant le vol, en établissant et en mémorisant le coefficient de détérioration courant du moteur, la première durée d'utilisation à chaque instant courant étant obtenue par le moyen de détermination à l'aide de la première relation suivante :

$$\Delta T = \frac{EP2 - \int_{T0}^{TPS} K(t).\delta t}{K2}$$

Où :

- K2 représente ledit coefficient de détérioration ciblé,

- EP2 représente ledit endommagement total,

- $\int_{T0}^{TPS} K(t).\delta t$ représente l'intégrale du coefficient de détérioration courant K(t) en fonction du temps pris entre un premier instant T0 correspondant au passage de la première puissance vers la troisième puissance et un ledit instant courant TPS,

- un moyen d'affichage coopérant avec ledit moyen de détermination pour afficher ladite première durée d'utilisation restante.

Ce moyen de pilotage peut être intégré à un instrument de première limitation, d'un moteur d'aéronef notamment.

L'invention et ses avantages apparaîtront avec plus de détails dans le cadre de la description qui suit avec des exemples de réalisation donnés à titre illustratif en référence aux figures annexées qui représentent :

- la figure 1, un schéma explicitant le moyen de pilotage selon l'invention,

- la figure 2, un schéma explicitant le procédé selon l'invention,

- la figure 3, un diagramme présentant une courbe de détérioration, et

- la figure 4, un diagramme présentant le coefficient de détérioration en fonction du temps.

Les éléments présents dans plusieurs figures distinctes sont affectés d'une seule et même référence.

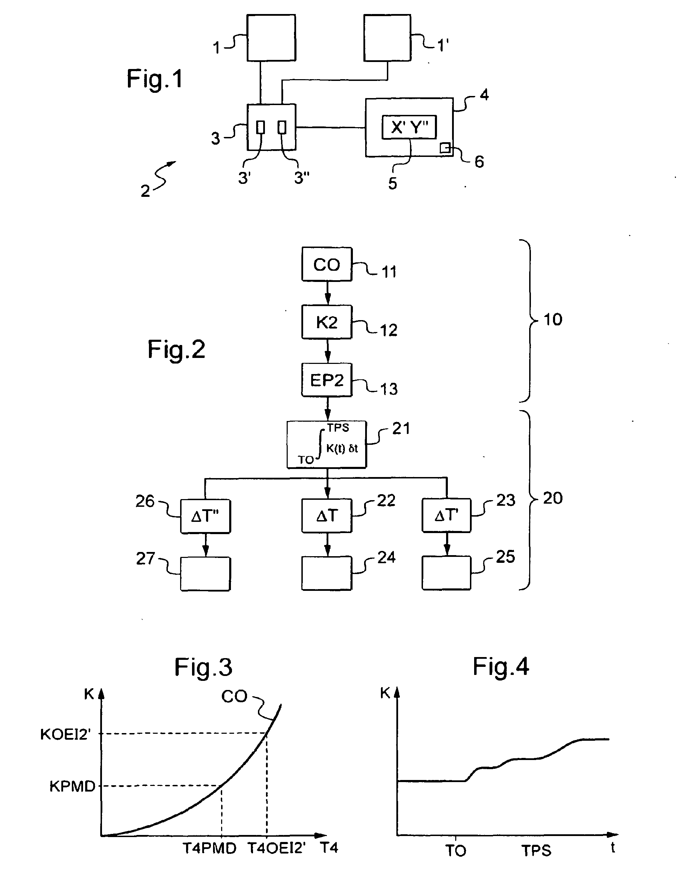

La figure 1 présente un moyen de pilotage 2 pour optimiser l'utilisation de moteurs 1, 1', d'une installation motrice d'un aéronef par exemple.

Chaque moteur est dimensionné et certifié pour fonctionner selon une pluralité de régimes de fonctionnement étagés. Par exemple, chaque moteur peut fonctionner selon un premier régime durant lequel le moteur peut développer une première puissance P1 durant une premier intervalle de temps D1, infini par exemple, et selon un deuxième régime durant lequel le moteur peut développer une deuxième puissance P2 durant une deuxième intervalle de temps D2 limité de manière continue.

Par exemple, chaque moteur est un turbomoteur, le premier régime étant le régime maximal continu durant lequel le moteur développe une puissance maximale continue PMC, le deuxième régime étant le régime de décollage durant lequel le moteur développe une puissance maximale au décollage PMD pendant au maximum 5 minutes en continu par exemple.

L'installation motrice schématisée présentant deux moteurs, le premier régime peut être le troisième régime d'urgence durant lequel le moteur développe une puissance intermédiaire d'urgence OEI sans limitation de temps, le deuxième régime pouvant être le deuxième régime d'urgence durant lequel le moteur développe une puissance maximale d'urgence OEI2' utilisable pendant deux minutes consécutives par exemple.

Dès lors, la première puissance P1 peut être la puissance maximale continue PMC auquel cas la deuxième puissance P2 est la puissance maximale au décollage PMD, ou encore la première puissance P1 peut être la puissance intermédiaire d'urgence OEI auquel cas la deuxième puissance P2 est la puissance maximale d'urgence OEI2'.

Le moyen de pilotage 2 peut comprendre un moyen de détermination 3 pour déterminer une première durée d'utilisation $\Delta T$ possible en continu de la deuxième puissance P2, lorsque le moteur développe une troisième puissance P3 supérieure à la première puissance P1 et inférieure ou égale à la deuxième puissance P2. Le moyen de détermination 3 est éventuellement pourvu d'un organe de calcul 3' faisant appel à une mémoire 3" pour établir la première durée d'utilisation selon des critères précis.

De plus le moyen de pilotage 2 possède un moyen d'affichage 4 pour présenter sur un écran 5 la première durée d'utilisation. Ce moyen d'affichage 4 a optionnellement un moyen d'alerte 6 pour déclencher une alerte, lorsque la première durée d'utilisation est inférieure à un premier seuil prédéterminé.

Pour une installation motrice munie d'un seul moteur, le moyen d'affichage affiche notamment alors la première durée d'utilisation $\Delta T$, cette première durée d'utilisation $\Delta T$ s'écoulant à une vitesse variant en fonction de la troisième puissance P3 développée par le moteur 1.

Pour une installation motrice munie d'une pluralité de moteurs, le moyen de détermination 3 détermine la première durée d'utilisation ΔT, associée à chaque moteur, le moyen d'affichage affichant soit la première durée d'utilisation ΔT de chaque moteur soit la première durée d'utilisation ΔT la plus faible.

Il est à noter que le moyen de pilotage 2 présenté comprend un unique moyen de détermination 3 commun aux deux moteurs. Toutefois, on comprend que le moyen de pilotage 2 peut comprendre un moyen de détermination par moteur par exemple.

La figure 2 explicite le procédé d'optimisation selon l'invention.

Lors d'une phase préparatoire 10, durant une première étape 11 on établit une courbe de détérioration CO d'un moteur, la courbe de détérioration CO fournissant un coefficient de détérioration K du moteur en fonction de la valeur d'un paramètre de surveillance de ce moteur.

Tout autre moyen similaire, tel qu'un tableau de données par exemple, déterminant ledit coefficient de détérioration en fonction de la valeur d'un paramètre de surveillance du moteur est envisageable.

Cette courbe est par exemple mémorisée dans la mémoire 3" du moyen de détermination 3.

En outre, le moteur étant éventuellement pourvu d'une turbine haute pression disposée en amont d'une turbine libre, le paramètre de surveillance peut être la température, dénommée TET par l'homme du métier, des gaz à l'entrée de la turbine haute pression.

En effet, les aubes de la turbine haute pression du turbomoteur sont soumises à la force centrifuge et à la température TET. Au-delà d'un certain seuil, le matériau constitutif des aubes « flue », les aubes subissant alors une déformation à savoir une augmentation de la longueur des aubes. Ainsi, ces dernières risquent de toucher le carter de la turbine haute pression et donc à se dégrader. La température TET est donc bien directement liée à la dégradation du turbomoteur.

Néanmoins, la température TET étant très difficile à mesurer en raison de son caractère relativement inhomogène, le paramètre de surveillance est de préférence la température, dénommée T4 par l'homme du métier, des gaz à l'entrée de la turbine libre. Cette dernière étant une bonne représentation de la température TET, elle est représentative de la dégradation du turbomoteur.

Le paramètre de surveillance peut être le couple développé par le moteur ou encore le régime de rotation d'un générateur de gaz tournant de ce moteur, voire être fonction d'une pluralité de paramètres tels que la température des gaz à l'entrée de la turbine libre modulée par la température extérieure et la pression extérieure par exemple.

La figure 3 présente un diagramme sur lequel apparaît la courbe CO déterminant un coefficient de détérioration K. On porte en abscisse la valeur d'un paramètre de surveillance du turbomoteur et en ordonnée la valeur du coefficient de détérioration K. On note que la courbe CO peut être obtenue par essais pour chaque modèle de moteur.

De préférence, le turbomoteur comportant une turbine libre, le paramètre de surveillance est la température T4 des gaz à l'entrée de la turbine libre. Cette température T4 représente bien l'état du turbomoteur puisque son endommagement est principalement causé par des températures excessives. Plus le turbomoteur chauffe, plus il se dégrade. Ce constat est aussi à l'origine de la forme exponentielle de la courbe CO.

Le diagramme fait apparaître la valeur du paramètre de surveillance T4PMD et le coefficient de détérioration associé KPMD relatifs au régime de décollage. Dès lors, la deuxième puissance P2 induit un coefficient de détérioration K2 égal à ce coefficient de détérioration associé KPMD lorsque cette deuxième puissance P2 est la puissance de décollage PMD.

De même, le diagramme fait apparaître la valeur du paramètre de surveillance T4OEI2' et le coefficient de détérioration associé KOEI2' relatifs au deuxième régime d'urgence. Dès lors, la deuxième puissance P2 induit un coefficient de détérioration K2 égal à ce coefficient de détérioration associé KOEI2' lorsque cette deuxième puissance P2 est la puissance maximale d'urgence OE12'.

En référence à la figure 2, durant une deuxième étape 12, on détermine, pour au moins un deuxième régime possible de l'enveloppe de fonctionnement du moteur, le coefficient de détérioration K2 dudit régime, par exemple le coefficient de détérioration KPMD ou KOEI2' précité.

En référence à la figure 2, durant une troisième étape 13, pour au moins un deuxième régime possible de l'enveloppe de fonctionnement du moteur, on établit un endommagement total EP2 provoqué par une utilisation de la deuxième puissance P2 du deuxième régime durant le deuxième intervalle de temps D2, cet endommagement total EP2 étant égal au produit du deuxième intervalle de temps D2 et d'un coefficient de détérioration ciblé K2 déterminé à l'aide de ladite courbe de détérioration CO en utilisant la valeur dudit paramètre de surveillance atteinte lorsque le moteur développe ladite deuxième puissance P2 soit :

$$EP2 = D2 * K2$$

Par exemple, on détermine un endommagement total EPMD associé au régime de décollage, cet endommagement total EPMD étant égal à

$$EPMD = DPMD * KPMD$$

où :

- EPMD représente l'endommagement total EP2 généré par l'utilisation de la puissance maximale au décollage durant un deuxième intervalle de temps D2, de 5 minutes par exemple,

- DPMD représente ledit deuxième intervalle de temps D2 d'utilisation de la puissance maximale au décollage en continu,

- KPMD représente le coefficient de détérioration ciblé obtenu à l'aide de la courbe de détérioration CO.

De même, on détermine un endommagement total EOEI2' associé au deuxième régime d'urgence, cet endommagement total EOEI2' étant égal à

$$EOEI2' = DOEI2' * KOEI2'$$

où :

- EOEI2' représente l'endommagement total EP2 généré par l'utilisation de la puissance maximale d'urgence durant un deuxième intervalle de temps D2, de 2 minutes par exemple,

- DOEI2' représente ledit deuxième intervalle de temps D2 d'utilisation de la puissance maximale d'urgence en continu,

- KOEI2' représente le coefficient de détérioration ciblé obtenu à l'aide de la courbe de détérioration CO.

Le coefficient de détérioration K2 de chaque régime et l'endommagement total EP2 de chaque régime peuvent être mémorisés dans la mémoire 3" du moyen de détermination 3 par exemple.

En temps réel et durant une phase de vol 20, lorsqu'un moteur développe une troisième puissance P3 supérieure à la première puissance P1 d'un premier régime et inférieure ou égale à la deuxième puissance P2 d'un deuxième régime, le moyen de pilotage 2 calcule et affiche la première durée d'utilisation $\Delta T$.

Ainsi, le moyen de détermination 3 reçoit la valeur courante du paramètre de surveillance du moteur et établit le coefficient de détérioration courant K(t) du moteur à l'aide de cette valeur courante du paramètre de surveillance et de la courbe de détérioration CO. Le moyen de détermination mémorise le coefficient de détérioration courant K(t) à compter du premier instant T0 correspondant au passage de la première puissance P1 vers la troisième puissance P3.

La figure 4 présente un exemple d'évolution du coefficient de détérioration courant K(t) du moteur entre ce premier instant T0 et l'instant courant TPS.

En référence à la figure 2, durant une première étape de calcul 21, le moyen de détermination 3 calcule en temps réel l'intégrale par rapport au temps du coefficient de détérioration courant K(t) entre le premier instant T0 et l'instant courant TPS.

Dès lors, au cours d'une deuxième étape de calcul 22, le moyen de détermination détermine la première durée d'utilisation $\Delta T$ à chaque instant courant TPS à l'aide de la première relation suivante :

$$\Delta T = \frac{EP2 - \int_{T0}^{TPS} K(t).\delta t}{K2}$$

où :

- K2 représente ledit coefficient de détérioration ciblé du deuxième régime concerné,

- EP2 représente ledit endommagement total du deuxième régime concerné,

- $\int_{T0} K(t).\partial t$ représente l'intégrale du coefficient de détérioration courant K(t) en fonction du temps pris entre un premier instant T0 correspondant au passage de la première puissance P1 vers la troisième puissance P3 et ledit instant courant TPS.

Lorsque le deuxième régime est le régime de décollage, on a :

$$\Delta T = \frac{EPMD - \int_{T0}^{TPS} K(t).\partial t}{KPMD}$$

De même, lorsque le deuxième régime est le deuxième régime d'urgence, on a :

$$\Delta T = \frac{EPOEI2' - \int_{T0}^{TPS} K(t).\partial t}{KOEI2'}$$

Ensuite, durant une étape d'affichage 24, le moyen de détermination 3 requiert l'affichage de la première durée d'utilisation $\Delta T$ sous la forme d'un compte à rebours dont la vitesse de défilement est variable en fonction de la troisième puissance P3.

En effet, plus la troisième puissance P3 se rapproche de la deuxième puissance P2, plus la première durée d'utilisation $\Delta T$ s'écoule rapidement, une seconde de la première durée d'utilisation $\Delta T$ étant toutefois supérieure à l'unité de mesure du temps du système international. On rappelle que depuis la treizième Conférence générale des poids et mesures, la seconde représentant ladite unité de mesure du temps n'est plus définie par rapport à l'année, mais par rapport à une propriété de la matière ; cette unité de base du système international ayant été définie en 1967 dans les termes suivants :

« La seconde est la durée de 9 192 631 770 périodes de la radiation correspondant à la transition entre les niveaux hyperfins F=3 et F=4 de l'état fondamental 6S½ de l'atome de césium 133 »

Pour que le compteur présentant la première durée d'utilisation $\Delta T$ indique zéro en partant de deux minutes, il faudra par exemple 3 minutes.

Par contre, lorsque la troisième puissance P3 est égale à la deuxième puissance P2, la première durée d'utilisation $\Delta T$ s'écoule à la même vitesse que le temps réel, une seconde de la première durée d'utilisation $\Delta T$ étant égale à l'unité de mesure du temps du système international.

En parallèle, durant une étape 23, le moyen de pilotage 2 détermine et affiche sous la forme d'un compte à rebours une deuxième durée d'utilisation $\Delta T'$ possible en continu d'une troisième puissance P3 développée à un instant courant TPS, la troisième puissance P3 étant d'une part supérieure à la première puissance P1 et d'autre part inférieure ou égale à la deuxième puissance P2, la deuxième durée d'utilisation $\Delta T'$ étant dépendant de la troisième puissance P3.

Pour déterminer ladite deuxième durée d'utilisation $\Delta T'$, en temps réel durant le vol, le moyen de détermination 3 détermine la deuxième durée d'utilisation $\Delta T'$ à chaque instant courant TPS à l'aide de la deuxième relation suivante :

$$\Delta T' = \frac{EP2 - \int_{T0}^{TPS} K(t).\partial t}{K(TPS)}$$

où

- *K*(*TPS*) représente ledit coefficient de détérioration à l'instant courant,

- EP2 représente ledit endommagement total,

- $\int_{T0}^{TPS} K(t).\delta t$ représente l'intégrale du coefficient de détérioration courant K(t) en fonction du temps pris entre un premier instant T0 correspondant au passage de la première puissance P1 vers la troisième puissance P3 et un ledit instant courant TPS.

Ensuite durant une étape d'affichage 25, le moyen de détermination 3 requiert l'affichage de la deuxième durée d'utilisation $\Delta T'$ sous la forme d'un compte à rebours variable en fonction de la troisième puissance P3.

Lorsque l'installation motrice a deux moteurs 1, 1', la deuxième durée d'utilisation $\Delta T'$ étant déterminée pour chaque moteur 1, 1', on affiche la deuxième durée d'utilisation $\Delta T'$ la plus faible.

Enfin, le moyen de pilotage 2 peut déclencher une alerte quand la deuxième durée d'utilisation $\Delta T'$ devient inférieure à un deuxième seuil prédéterminé.

En outre, durant une étape 26, le moyen de pilotage 2 détermine et affiche sous la forme d'un compte à rebours une troisième durée d'utilisation $\Delta T''$ possible de manière cumulée et discontinu de la deuxième puissance lorsque le moteur développe une troisième puissance d'une part supérieure à la première puissance et d'autre part inférieure ou égale à la deuxième puissance.

Lors d'une phase préparatoire, à l'aide de la courbe de détérioration CO, on établit un endommagement global EPC2 provoqué par une utilisation de la deuxième puissance durant un intervalle de temps cumulé TC2, cet endommagement global étant égal au produit du deuxième intervalle de temps cumulé et du coefficient de détérioration ciblé déterminé à l'aide de la courbe de détérioration en utilisant la valeur du paramètre de surveillance atteinte lorsque le moteur développe la deuxième puissance.

De plus, les excursions à des troisièmes puissances comprises entre la première puissance et la deuxième puissance sont discrètes et sont numérotées sous l'indice i. L'endommagement intermédiaire généré lors de chaque excursion d'une durée intermédiaire di est égal à :

$$Ei = \int_0^{di} K(t).\delta t$$

Chaque endommagement intermédiaire Ei est établi et mémorisé durant le vol par le moyen de détermination 3.

Dès lors, à chaque utilisation courante de la troisième puissance, faisant suite à des excursions précédentes ayant données naissances à la mémorisation d'un endommagement intermédiaire, le moyen de détermination 3 établit et mémorise le coefficient de détérioration courant du moteur, puis détermine une troisième durée d'utilisation $\Delta T''$ à chaque instant courant à l'aide de la relation suivante :

$$\Delta T'' = \frac{EPC2 - \left[ \sum_{i=1}^{n-1} Ei + \int_{T0}^{TPS} K(t).\delta t \right]}{K2}$$

où :

- K2 représente ledit coefficient de détérioration ciblé,

- EPC2 représente ledit endommagement global, sous l'effet d'une utilisation de la deuxième puissance durant une durée cumulée TC2,

- $\sum_{i=1}$ $E_i$ représente le cumul des endommagements intermédiaire mémorisés préalablement à l'utilisation courante, à savoir lors des (n-1) excursions à des puissances d'une part supérieures à la première puissance et d'autre part inférieures ou égales à la deuxième puissance,

- $\int_{T0}^{TPS} K(t).\delta t$ représente l'intégrale du coefficient de détérioration courant K(t) en fonction du temps pris entre un premier instant T0 correspondant au début de l'utilisation courante à savoir au énième passage de la première puissance vers la troisième puissance et ledit instant courant TPS.


**Revendications**

1. Procédé pour optimiser l'utilisation d'une installation motrice pour aéronef munie d'au moins un moteur (1) fonctionnant selon une enveloppe de performances englobant au moins un premier régime et un deuxième régime, ledit premier régime présentant une première puissance (P1) utilisable selon un premier intervalle de temps (D1) prédéterminé, ledit deuxième régime présentant une deuxième puissance (P2) supérieure à ladite première puissance (P1), la deuxième puissance (P2) étant utilisable selon un deuxième intervalle de temps (D2) prédéterminé en continu, **caractérisé en ce que** l'on détermine et on affiche une première durée d'utilisation ($\Delta T$) possible en continu de ladite deuxième puissance (P2) lorsque le moteur (1, 1') développe une troisième puissance (P3) d'une part supérieure à la première puissance (P1) et d'autre part inférieure ou égale à la deuxième puissance (P2), ladite première durée d'utilisation ($\Delta T$) s'écoulant à une vitesse variable dépendant de ladite troisième puissance (P3).

2. Procédé selon la revendication 1,
**caractérisé en ce que** pour déterminer ladite première durée d'utilisation ($\Delta T$) :

- lors d'une phase préparatoire (10), on établit une courbe de détérioration (CO) d'un moteur (1, 1') fournissant un coefficient de détérioration ($\underline{K}$) du moteur en fonction de la valeur d'un paramètre de surveillance (T4) de ce moteur (1, 1'), et on établit un endommagement total (EP2) provoqué par une utilisation de ladite deuxième puissance (P2) durant ledit deuxième intervalle de temps (D2), cet endommagement total (EP2) étant égal au produit du deuxième intervalle de temps (D2) et d'un coefficient de détérioration ciblé (K2) déterminé à l'aide de ladite courbe (CO) en utilisant la valeur dudit paramètre de surveillance atteinte lorsque le moteur développe ladite deuxième puissance (P2),
- en temps réel durant le vol, on établit et on mémorise le coefficient de détérioration courant (K(t)) du moteur, la première durée d'utilisation ($\Delta T$) à chaque instant courant (TPS) étant obtenue à l'aide de la première relation suivante :

$$\Delta T = \frac{EP2 - \int_{T0}^{TPS} K(t).\delta t}{K2}$$

où :

- K2 représente ledit coefficient de détérioration ciblé,
- EP2 représente ledit endommagement total,

- $\int_{T0}^{TPS} K(t).\delta t$ représente l'intégrale du coefficient de

détérioration courant K(t) en fonction du temps pris entre un premier instant T0 correspondant au passage de la première puissance (P1) vers la troisième puissance (P3) et ledit instant courant TPS.

**3.** Procédé selon l'une quelconque des revendications 1 à 2,
**caractérisé en ce que** plus la troisième puissance (P3) se rapproche de la deuxième puissance (P2), plus la première durée d'utilisation ($\Delta T$) s'écoule rapidement.

**4.** Procédé selon l'une quelconque des revendications 1 à 3,
**caractérisé en ce que** lorsque la troisième puissance (P3) est égale à la deuxième puissance (P2), la première durée d'utilisation ($\Delta T$) s'écoule à la même vitesse que le temps réel, une seconde de la première durée d'utilisation ($\Delta T$) étant égale à l'unité de mesure du temps du système international.

**5.** Procédé selon l'une quelconque des revendications 1 à 4,
**caractérisé en ce que** l'installation motrice ayant deux moteurs, ladite première durée d'utilisation ($\Delta T$) étant déterminée pour chaque moteur, on affiche la première durée d'utilisation ($\Delta T$) la plus faible.

**6.** Procédé selon l'une quelconque des revendications 1 à 5,
**caractérisé en ce que** l'on déclenche une alerte quand ladite première durée d'utilisation ($\Delta T$) devient inférieure à un premier seuil prédéterminé.

**7.** Procédé selon l'une quelconque des revendications 1 à 6,
**caractérisé en ce que** l'on détermine et on affiche une deuxième durée d'utilisation ($\Delta T'$) possible en continu d'une troisième puissance (P3) développée à un instant courant (TPS), la troisième puissance (P3) étant d'une part supérieure à la première puissance (P1) et d'autre part inférieur ou égale à la deuxième puissance (P2), ladite deuxième durée d'utilisation ($\Delta T'$) étant dépendant/de ladite troisième puissance (P3).

**8.** Procédé selon la revendication 7,
**caractérisé en ce que** pour déterminer ladite deuxième durée d'utilisation ($\Delta T'$) :

- lors d'une phase préparatoire (10), on établit une courbe de détérioration (CO) d'un moteur fournissant un coefficient de détérioration du moteur (1, 1') en fonction de la valeur d'un paramètre de surveillance (T4) de ce moteur (1, 1'), et
on établit un endommagement total (EP2) provoqué par une utilisation de ladite deuxième puissance (P2) durant ledit deuxième intervalle de temps (D2), cet endommagement total (EP2) étant égal au produit du deuxième intervalle de temps (D2) et d'un coefficient de détérioration ciblé (K2) déterminé à l'aide de ladite courbe (CO) en utilisant la valeur dudit paramètre de surveillance (T4) atteinte lorsque le moteur développe ladite deuxième puissance (P2),
- en temps réel durant le vol, on établit et on mémorise le coefficient de détérioration (K(t)) courant du moteur, la deuxième durée d'utilisation ($\Delta T'$) à chaque instant courant (TPS) étant obtenue à l'aide de la deuxième relation suivante :

$$\Delta T' = \frac{EP2 - \int_{T0}^{TPS} K(t).\delta t}{K(TPS)}$$

Où :

- $K(TPS)$ représente ledit coefficient de détérioration à l'instant courant,
- EP2 représente ledit endommagement total,

- $\int_{T0}^{TPS} K(t).\delta t$ représente l'intégrale du coefficient de

détérioration courant K(t) en fonction du temps pris entre un premier instant T0 correspondant au passage de la première puissance (P1) vers la troisième puissance (P3) et ledit instant courant TPS.

9. Procédé selon l'une quelconque des revendications 7 à 8,
**caractérisé en ce que** l'installation motrice ayant deux moteurs (1, 1'), ladite deuxième durée d'utilisation ($\Delta T'$) étant déterminée pour chaque moteur (1, 1'), on affiche la deuxième durée d'utilisation ($\Delta T'$) la plus faible.

10. Procédé selon l'une quelconque des revendications 7 à 9,
**caractérisé en ce que** l'on déclenche une alerte quand ladite deuxième durée d'utilisation ($\Delta T'$) devient inférieure à un deuxième seuil prédéterminé.

11. Procédé selon l'une quelconque des revendications 1 à 10,
**caractérisé en ce que** ladite deuxième puissance (P2) pouvant être utilisé pendant un temps cumulé (TC2), l'on détermine et on affiche une troisième durée d'utilisation ($\Delta T''$) possible en temps cumulée et discontinu de ladite deuxième puissance (P2) lorsque le moteur développe au cours d'une utilisation courante une troisième puissance (P3) d'une part supérieure à la première puissance (P1) et d'autre part inférieur ou égal à la deuxième puissance (P2), ladite troisième durée d'utilisation ($\Delta T''$) étant déterminé :

- lors d'une phase préparatoire, établissant une courbe de détérioration d'un moteur fournissant un coefficient de détérioration du moteur en fonction de la valeur d'un paramètre de surveillance de ce moteur, et établissant un endommagement global provoqué par une utilisation de la deuxième puissance durant un temps cumulé TC2, cet endommagement global étant égal au produit du temps cumulé TC2 et d'un coefficient de détérioration ciblé déterminé à l'aide de ladite courbe en utilisant la valeur du paramètre de surveillance atteinte lorsque le moteur développe la deuxième puissance,
- à l'issue de chaque utilisation en continu durant une durée intermédiaire de la troisième puissance, en mémorisant un endommagement intermédiaire $E_I$ déterminée à l'aide de l'intégrale suivante du coefficient de détérioration K(t) en fonction du temps durant ladite durée intermédiaire :

$$Ei = \int_{0}^{di} K(t).\delta t$$

- en temps réel durant le vol, on établit et on mémorise le coefficient de détérioration courant du moteur, la troisième durée d'utilisation $\Delta T''$ à chaque instant courant étant obtenue à l'aide de la troisième relation suivante :

$$\Delta T'' = \frac{EPC2 - \left[ \sum_{i=1}^{n-1} Ei + \int_{T0}^{TPS} K(t).\delta t \right]}{K2}$$

où :

- K2 représente ledit coefficient de détérioration ciblé,
- EPC2 représente ledit endommagement global,

- $\sum_{i=1}^{n-1} Ei$ représente le cumul des endommagements intermédiaires mémorisés lors des utilisations de la troisième puissance précédant l'utilisation courante,

- $\int_{T0}^{TPS} K(t).\delta t$ représente l'intégrale du coefficient de

détérioration courant K(t) en fonction du temps pris entre un premier instant T0 correspondant au passage de la première puissance vers la troisième puissance lors de l'utilisation courante et ledit instant courant TPS.

**EP 2 423 452 B1**

12. Moyen de pilotage (2) d'une installation motrice pour aéronef muni d'au moins un moteur (1, 1') fonctionnant selon une enveloppe de performances englobant au moins un premier régime et un deuxième régime, ledit premier régime présentant une première puissance (P1) utilisable selon un premier intervalle de temps (D1) prédéterminé, ledit deuxième régime présentant une deuxième puissance (P2) supérieure à ladite première puissance (P1), la deuxième puissance (P2) étant utilisable selon un deuxième intervalle de temps (D2) prédéterminé en continu, **caractérisé en ce qu'**il comporte:

- un moyen de détermination (3) d'une première durée d'utilisation (ΔT) possible en continu de ladite deuxième puissance (P2) lorsque le moteur (1, 1') développe une troisième puissance (P3) d'une part supérieure à la première puissance (P1) et d'autre part inférieure ou égale à la deuxième puissance (P2) le moyen de détermination déterminant ladite première durée d'utilisation (ΔT) :

o à l'aide d'une courbe de détérioration (CO) d'un moteur (1, 1') fournissant un coefficient de détérioration du moteur (1, 1') en fonction de la valeur d'un paramètre de surveillance (T4) de ce moteur (1, 1'), et d'un endommagement total (EP2) provoqué par une utilisation de ladite deuxième puissance (P2) durant ledit deuxième intervalle de temps (D2), cet endommagement total (EP2) étant égal au produit du deuxième intervalle de temps (D2) et d'un coefficient de détérioration ciblé (K2) déterminé à l'aide de ladite courbe (CO) en utilisant la valeur dudit paramètre de surveillance atteinte lorsque le moteur développe ladite deuxième puissance (P2),
o en temps réel durant le vol, en établissant et en mémorisant le coefficient de détérioration (K(t)) courant du moteur (1, 1'), la première durée d'utilisation (ΔT) à chaque instant courant (TPS) étant obtenue par le moyen de détermination (3) à l'aide de la première relation suivante :

$$\Delta T = \frac{EP2 - \int_{T0}^{TPS} K(t).\delta t}{K2}$$

où :

• K2 représente ledit coefficient de détérioration ciblé,
• EP2 représente ledit endommagement total,

• $\int_{T0}^{TPS} K(t).\delta t$ représente l'intégrale du coefficient de

détérioration courant K(t) en fonction du temps pris entre un premier instant T0 correspondant au passage de la première puissance (P1) vers la troisième puissance (P3) et un ledit instant courant TPS,

- un moyen d'affichage (4) coopérant avec ledit moyen de détermination (3) pour afficher ladite première durée d'utilisation (ΔT).

**Claims**

1. Method for optimising the use of an aircraft power plant provided with at least one engine (1) operating in accordance with a performance envelope including at least a first rating and a second rating, said first rating having a first power (P1) usable over a predetermined first time interval (D1), said second rating having a second power (P2) greater than said first power (P1), the second power (P2) being usable continuously over a predetermined second time interval (D2),
**characterised in that** when the engine (1, 1') develops a third power (P3) that is both greater than the first power (P1) and less than or equal to the second power (P2), a possible first duration of continuous use (ΔT) of said second power (P2) is determined and displayed, said first duration of use (ΔT) elapsing at a speed that is variable and dependent on said third power (P3).

15

**2.** Method according to Claim 1,
**characterised in that** in order to determine said first duration of use (Δ*T*):

- during a preparatory stage (10), a deterioration curve (CO) of an engine (1, 1') is established, the curve providing a coefficient of deterioration (K) of the engine as a function of the value of a monitoring parameter (T4) of said engine (1, 1'),
and a total damage (EP2) caused by a use of said second power (P2) during said second time interval (D2) is established, said total damage (EP2) being equal to the product of the second time interval (D2) and a targeted deterioration coefficient (K2) determined, with the help of said curve (CO), by using the value of said monitoring parameter reached when the engine develops said second power (P2),
- in real time, during the flight, the current deterioration coefficient (K(t)) of the engine is established and stored, the first duration of use (Δ*T*) at each current instant (TPS) being obtained using the following first relationship:

$$\Delta T = \frac{EP2 - \int_{T0}^{TPS} K(t).\delta t}{K2}$$

where:

• K2 represents said targeted deterioration coefficient,
• EP2 represents said total damage,

• $\int_{T0}^{TPS} K(t).\delta t$ represents the integral of the current deterioration coefficient K(t) as a function of time taken between a first instant T0 corresponding to passing from the first power (P1) to the third power (P3) and said current instant TPS.

**3.** Method according to any one of Claims 1 to 2, **characterised in that** the closer the third power (P3) comes to the second power (P2), the faster the first duration of use (Δ*T*) elapses.

**4.** Method according to any one of Claims 1 to 3, **characterised in that** when the third power (P3) is equal to the second power (P2), the first duration of use (Δ*T*) elapses at the same speed as real time, one second of the first duration of use (Δ*T*) being equal to the unit of time measurement of the International System.

**5.** Method according to any one of Claims 1 to 4, **characterised in that** the power plant has two engines and said first duration of use (Δ*T*) is determined for each engine, with the smaller first duration of use (Δ*T*) being displayed.

**6.** Method according to any one of Claims 1 to 5, **characterised in that** a warning is triggered when said first duration of use (Δ*T*) becomes less than a first predetermined threshold.

**7.** Method according to any one of Claims 1 to 6, **characterised in that** a second possible duration of continuous use (Δ*T'*) of a third power (P3) developed at a current instant (TPS) is determined and displayed, the third power (P3) being both greater than the first power (P1) and less than or equal to the second power (P2), said second duration of use (Δ*T'*) being dependent on said third power (P3).

**8.** Method according to Claim 7,
**characterised in that** in order to determine said second duration of use (Δ*T'*) :

- during a preparatory stage (10), a deterioration curve (CO) of an engine is established, the curve providing a coefficient of deterioration of the engine (1, 1') as a function of the value of a monitoring parameter (T4) of said engine (1, 1'), and a total damage (EP2) caused by a use of said second power (P2) during said second time interval (D2) is established, said total damage (EP2) being equal to the product of the second time interval (D2) and a targeted deterioration coefficient (K2) determined, with the help of said curve (CO), by using the value of said monitoring parameter (T4) reached when the engine develops said second power (P2),
- in real time, during the flight, the current deterioration coefficient (K(t)) of the engine is established and stored, the second duration of use (Δ*T'*) at each current instant (TPS) being obtained using the following second

relationship:

$$\Delta T' = \frac{EP2 - \int_{T0}^{TPS} K(t).\delta t}{K(TPS)}$$

where:

- K(TPS) represents said deterioration coefficient at the current instant,
- EP2 represents said total damage,

- $\int_{T0}^{TPS} K(t).\delta t$ represents the integral of the current deterioration coefficient K(t) as a function of time taken between a first instant T0 corresponding to passing from the first power (P1) to the third power (P3) and said current instant TPS.

9. Method according to any one of Claims 7 to 8, **characterised in that** the power plant has two engines (1, 1') and said second duration of use ($\Delta T$) is determined for each engine (1, 1'), with the smaller second duration of use ($\Delta T$) being displayed.

10. Method according to any one of Claims 7 to 9, **characterised in that** a warning is triggered when said second duration of use ($\Delta T$) becomes less than a second predetermined threshold.

11. Method according to any one of Claims 1 to 10, **characterised in that** when said second power (P2) can be used for an accumulated time (TC2), a third possible duration of use ($\Delta T''$), in accumulated and discontinuous time, of said second power (P2) is determined and displayed when the engine develops during a current use a third power (P3) that is both greater than the first power (P1) and less than or equal to the second power (P2), said third duration of use ($\Delta T''$) being determined:

  - during a preparatory stage, establishing a deterioration curve of an engine, the curve providing a deterioration coefficient of the engine as a function of the value of a monitoring parameter of said engine, and establishing an overall damage caused by a use of the second power during an accumulated time TC2, said overall damage being equal to the product of the accumulated time TC2 and a targeted deterioration coefficient determined, with the help of said curve, by using the value of the monitoring parameter reached when the engine develops the second power,
  - at the end of each continuous use of the third power for an intermediate duration, by storing an intermediate damage $E_i$ determined using the following integral of the deterioration coefficient K(t) as a function of time during said intermediate duration:

$$Ei = \int_{0}^{di} K(t).\delta t$$

  - in real time, during the flight, the current deterioration coefficient of the engine is established and stored, the third duration of use $\Delta T''$ at each current instant being obtained using the following third relationship:

$$\Delta T'' = \frac{EPC2 - \left[\sum_{i=1}^{n-1} Ei + \int_{T0}^{TPS} K(t).\delta t\right]}{K2}$$

where:

- K2 represents said targeted deterioration coefficient,

• EPC2 represents said overall damage,

• $\sum_{i=1}^{n-1} Ei$ represents the stored accumulated intermediate damage during uses of the third power preceding the current use,

• $\int_{T0}^{TPS} K(t).\delta t$ represents the integral of the current deterioration coefficient K(t) as a function of time taken between a first instant T0 corresponding to passing from the first power to the third power during the current use and said current instant TPS.

12. Piloting means (2) for an aircraft power plant provided with at least one engine (1, 1') operating in accordance with a performance envelope including at least a first rating and a second rating, said first rating having a first power (P1) usable over a predetermined first time interval (D1), said second rating having a second power (P2) greater than said first power (P1), the second power (P2) being usable continuously over a predetermined second time interval (D2),
**characterised in that** it comprises:

- a determination means (3) for determining a first possible duration of continuous use ($\Delta$T) of said second power (P2) when the engine (1, 1') develops a third power (P3) that is both greater than the first power (P1) and less than or equal to the second power (P2), the determination means determining said first duration of use ($\Delta T$) :

o with the help of a deterioration curve (CO) of an engine (1, 1'), the curve providing a coefficient of deterioration of the engine (1, 1') as a function of the value of a monitoring parameter (T4) of said engine (1, 1'), and of a total damage (EP2) caused by a use of said second power (P2) during said second time interval (D2), said total damage (EP2) being equal to the product of the second time interval (D2) and a targeted deterioration coefficient (K2) determined, with the help of said curve (CO), by using the value of said monitoring parameter reached when the engine develops said second power (P2),

o in real time, during the flight, by establishing and storing the current deterioration coefficient (K(t)) of the engine (1, 1'), the first duration of use ($\Delta T$) at each current instant (TPS) being obtained by the determination means (3) using the following first relationship:

$$\Delta T = \frac{EP2 - \int_{T0}^{TPS} K(t).\delta t}{K2}$$

where:

• K2 represents said targeted deterioration coefficient,
• EP2 represents said total damage, *TPS*

• $\int_{T0}^{TPS} K(t).\delta t$ represents the integral of the current deterioration coefficient K(t) as a function of time taken between a first instant T0 corresponding to passing from the first power (P1) to the third power (P3) and said current instant TPS,

- a display means (4) co-operating with said determination means (3) to display said first duration of use ($\Delta T$).

**Patentansprüche**

1. Verfahren zur Optimierung des Einsatzes einer Motoranordnung eines Luftfahrzeugs mit mindestens einem Motor (1), der in einer Reihe von Leistungsstufen arbeitet, die mindestens eine erste und eine zweite Betriebsart umfassen, wobei die erste Betriebsart eine erste Leistung (P1) aufweist, die während eines ersten vorbestimmten Zeitintervalls (D1) einsetzbar ist, wobei die zweite Betriebsart eine zweite Leistung (P2) aufweist, die größer als die erste Leistung (P1) ist, wobei die zweite Leistung (P2) kontinuierlich während eines zweiten vorbestimmten Zeitintervalls (D2) einsetzbar ist,
**dadurch gekennzeichnet, dass** eine erste mögliche Dauer (∆T) eines kontinuierlichen Einsatzes der zweiten Leistung (P2) bestimmt und angezeigt wird, während der Motor (1, 1') eine dritte Leistung (P3) entwickelt, die einerseits größer als die erste Leistung (P1) und andererseits kleiner oder gleich der zweiten Leistung (P2) ist, wobei die erste Einsatzdauer (∆T) mit einer variablen Geschwindigkeit vergeht, die von der dritten Leistung (P3) abhängt.

2. Verfahren nach Anspruch 1,
   **dadurch gekennzeichnet, dass** zur Bestimmung der ersten Einsatzzeit (∆T):

   - während einer Vorbereitungsphase (10) eine Abnutzungskurve (CO) eines Motors (1, 1') erstellt wird, die einen Abnutzungskoeffizienten (K̲) des Motors in Abhängigkeit von dem Wert eines Überwachungsparameters (T4) dieses Motors (1, 1') liefert, und ein Totalschaden (EP2) ermittelt wird, der erzeugt wird durch den Einsatz der zweiten Leistung (P2) während des zweiten Zeitintervalls (D2), wobei dieser Totalschaden (EP2) gleich dem Produkt aus dem zweiten Zeitintervall (D2) und einem angezielten Abnutzungskoeffizienten (K2) ist, der mit Hilfe der Kurve (CO) bestimmt wird, indem der Wert des Überwachungsparameters verwendet wird, der erreicht wird, während der Motor die zweite Leistung (P2) entwickelt,
   - in Echtzeit während des Flugs der aktuelle Abnutzungskoeffizient (K(t)) des Motors ermittelt und gespeichert wird, wobei die erste Einsatzdauer (∆T) zu jedem aktuellen Zeitpunkt (TPS) mit Hilfe der folgenden ersten Gleichung erhalten wird:

$$\Delta T = \frac{EP2 - \int_{T0}^{TPS} K(t).\delta t}{K2}$$

   wobei:

   • K2 den angezielten Abnutzungskoeffizienten darstellt,
   • EP2 den Totalschaden darstellt, und

   • $\int_{T0}^{TPS} K(t).\delta t$ das Integral des Koeffizienten der aktuellen Abnutzung K(t) in Abhängigkeit von der Zeit zwischen einem ersten Zeitpunkt (T0), der dem Übergang von der ersten Leistung (P1) zur dritten Leistung (P3) entspricht, und dem aktuellen Zeitpunkt (TPS) darstellt.

3. Verfahren nach einem der Ansprüche 1 oder 2,
   **dadurch gekennzeichnet, dass** je mehr sich die dritte Leistung (P3) der zweiten Leistung (P2) annähert, umso schneller läuft die Einsatzzeit (∆T) ab.

4. Verfahren nach einem der Ansprüche 1 bis 3,
   **dadurch gekennzeichnet, dass**, wenn die dritte Leistung (P3) gleich der zweiten Leistung (P2) ist, die erste Einsatzzeit (∆T) mit der gleichen Geschwindigkeit wie die Echtzeit abläuft, wobei eine Sekunde der ersten Einsatzzeit (∆T) der Zeitmesseinheit des internationalen Systems entspricht.

5. Verfahren nach einem der Ansprüche 1 bis 4,
   **dadurch gekennzeichnet, dass** die Motoranordnung zwei Motoren aufweist und die erste Einsatzdauer (∆T) für jeden Motor bestimmt wird, und die kleinste erste Einsatzdauer (∆T) angezeigt wird.

6. Verfahren nach einem der Ansprüche 1 bis 5,
   **dadurch gekennzeichnet, dass** ein Alarm ausgelöst wird, wenn die erste Einsatzzeit (∆T) kleiner wird als ein erster vorbestimmter Schwellenwert.

7. Verfahren nach einem der Ansprüche 1 bis 6,
   **dadurch gekennzeichnet, dass** eine zweite mögliche Dauer (∆T') eines kontinuierlichen Einsatzes einer dritten Leistung (P3), die zu einem aktuellen Zeitpunkt (TPS) entwickelt wird, bestimmt und angezeigt wird, wobei die dritte Leistung (P3) einerseits größer als die erste Leistung (P1) und andererseits kleiner oder gleich der zweiten Leistung (P2) ist, wobei die zweite Einsatzzeit (ΔT') von der dritten Leistung (P3) abhängt.

8. Verfahren nach Anspruch 7,
**dadurch gekennzeichnet, dass** zur Bestimmung der zweiten Einsatzzeit (ΔT'):

- während einer Vorbereitungsphase (10) eine Abnutzungskurve (CO) eines Motors erstellt wird, die einen Abnutzungskoeffizienten des Motors (1, 1') in Abhängigkeit von dem Wert eines Überwachungsparameters (T4) dieses Motors (1, 1') liefert, und ein Totalschaden (EP2) ermittelt wird, der hervorgerufen wird durch einen Einsatz der zweiten Leistung (P2) während des zweiten Zeitintervalls (D2), wobei dieser Totalschaden (EP2) gleich dem Produkt aus dem zweiten Zeitintervall (D2) und einem angezielten Abnutzungskoeffizienten (K2) ist, der mit Hilfe der Kurve (CO) bestimmt wird unter Verwendung des Wertes des Überwachungsparameters (T4), der erreicht wird, während der Motor die zweite Leistung (P2) entwickelt,
- in Echtzeit während des Flugs der aktuelle Abnutzungskoeffizient (K(t)) des Motors ermittelt und gespeichert wird, wobei die zweite Einsatzdauer (ΔT') zu jedem aktuellen Zeitpunkt (TPS) mit Hilfe der folgenden zweiten Gleichung erhalten wird:

$$\Delta T' = \frac{EP2 - \int_{T0}^{TPS} K(t).\delta t}{K(TPS)}$$

wobei:

• K(TPS) den Abnutzungskoeffizienten zum aktuellen Zeitpunkt darstellt,
• EP2 den Totalschaden darstellt, und
• $\int_{T0}^{TPS} K(t).\delta t$ das Integral des Koeffizienten der aktuellen Abnutzung (K(t)) in Abhängigkeit von der Zeit zwischen einem ersten Zeitpunkt (T0), der dem Übergang von der ersten Leistung (P1) zur dritten Leistung (P3) entspricht, und dem aktuellen Zeitpunkt (TPS) darstellt.

9. Verfahren nach einem der Ansprüche 7 oder 8,
**dadurch gekennzeichnet, dass** die Motoranordnung zwei Motoren (1, 1') aufweist, und die zweite Einsatzdauer (ΔT') für jeden Motor (1, 1') bestimmt wird, wobei die kleinste der zweiten Einsatzdauern (ΔT') angezeigt wird.

10. Verfahren nach einem der Ansprüche 7 bis 9,
**dadurch gekennzeichnet, dass** ein Alarm ausgelöst wird, wenn die zweite Einsatzdauer (ΔT') kleiner wird als ein zweiter vorbestimmter Schwellenwert.

11. Verfahren nach einem der Ansprüche 1 bis 10,
**dadurch gekennzeichnet, dass** die zweite Leistung (P2) während einer aufgelaufenen Zeit (TC2) eingesetzt werden kann, und eine dritte Einsatzzeit (ΔT") bestimmt und angezeigt wird, die während der aufgelaufenen Zeit möglich ist und unterbrochen wird von der zweiten Leistung (P2), während der Motor während eines laufenden Einsatzes eine dritte Leistung (P3) entwickelt, die einerseits größer als die erste Leistung (P1) und andererseits kleiner oder gleich der zweiten Leistung (P2) ist, wobei die dritte Einsatzdauer (ΔT") dadurch bestimmt wird, dass

- während einer Vorbereitungsphase eine Abnutzungskurve eines Motors erstellt wird, die einen Abnutzungskoeffizienten des Motors in Abhängigkeit von dem Wert eines Überwachungsparameters dieses Motors liefert, und ein Totalschaden ermittelt wird, hervorgerufen durch einen Einsatz der zweiten Leistung während einer aufgelaufenen Zeit (TC2), wobei dieser Totalschaden gleich dem Produkt aus der aufgelaufenen Zeit (TC2) und einem angezielten Abnutzungskoeffizienten ist, der mit Hilfe der Kurve bestimmt wird unter Verwendung des Wertes des Überwachungsparameters, der erzielt wird, während der Motor die zweite Leistung entwickelt,
- am Ende eines jeden kontinuierlichen Einsatzes der dritten Leistung während einer Zwischendauer eine zwischenzeitliche Beschädigung $E_i$ gespeichert wird, die mit Hilfe des folgenden Integrals des Abnutzungskoeffizienten (K(t)) in Abhängigkeit von der Zeit während der Zwischendauer bestimmt wird:

$$Ei = \int_0^{di} K(t).\delta t,$$

- in Echtzeit während des Fluges der aktuelle Abnutzungskoeffizient des Motors erfasst und gespeichert wird, wobei die dritte Einsatzdauer ($\Delta T''$) zu jedem aktuellen Zeitpunkt erhalten wird mit Hilfe der folgenden dritten Gleichung:

$$\Delta T'' = \frac{EP2 - \left[ \sum_{i=1}^{n-1} Ei + \int_{T0}^{TPS} K(t).\delta t \right]}{K2},$$

wobei:

- K2 den angezielten Abnutzungskoeffizienten darstellt,
- EPC2 den Totalschaden darstellt,
- $\sum_{i=1}^{n-1}$ die Summe der zwischenzeitlichen Schäden darstellt, die während der Einsätze der dritten Leistung vor dem aktuellen Einsatz gespeichert wurden, und
- $\int_{T0}^{TPS} K(t).\delta t$ das Integral des Koeffizienten der aktuellen Abnutzung (K(t)) in Abhängigkeit von der Zeit zwischen einem ersten Zeitpunkt (T0), der dem Übergang von der ersten Leistung zur dritten Leistung während des laufenden Einsatzes entspricht, und dem aktuellen Zeitpunkt (TPS) darstellt.

12. Vorrichtung (2) zur Steuerung einer Motoranordnung eines Luftfahrzeugs mit mindestens einem Motor (1, 1'), der in einem Leistungsbereich arbeitet, der mindestens eine erste und eine zweite Betriebsart umfasst, wobei die erste Betriebsart eine erste Leistung (P1) aufweist, die während eines ersten vorbestimmten Zeitintervalls (D1) einsetzbar ist, die zweite Betriebsart eine zweite Leistung (P2) aufweist, die größer als die erste Leistung (P1) ist, wobei die zweite Leistung (P2) während eines zweiten vorbestimmten Zeitintervalls (D2) kontinuierlich einsetzbar ist, **dadurch gekennzeichnet, dass** die Vorrichtung aufweist:

- ein Mittel (3) zur Bestimmung einer ersten möglichen Dauer eines kontinuierlichen Einsatzes der zweiten Leistung (P2), während der Motor (1, 1') eine dritte Leistung (P3) entwickelt, die einerseits größer als die erste Leistung (P1) und andererseits kleiner oder gleich einer zweiten Leistung (P2) ist, wobei das Mittel die erste Einsatzzeit ($\Delta T$) ermittelt:

° mit Hilfe einer Abnutzungskurve (CO) eines Motors (1, 1'), die einen Abnutzungskoeffizienten des Motors (1, 1') in Abhängigkeit von dem Wert eines Überwachungsparameters (T4) dieses Motors (1, 1') liefert, und von einem Totalschaden (EP2), hervorgerufen durch einen Einsatz der zweiten Leistung (P2) während des zweiten Zeitintervalls (D2), wobei der Totalschaden (EP2) gleich dem Produkt aus dem zweiten Zeitintervall (D2) und einem angezielten Abnutzungskoeffizienten (K2) ist, der mit Hilfe dieser Kurve (CO) bestimmt wird unter Verwendung des Wertes des Überwachungsparameters, der erreicht wird, während der Motor die zweite Leistung (P2) entwickelt,
° in Echtzeit während des Fluges durch Erstellung und Speicherung des aktuellen Abnutzungskoeffizienten (K(t)) des Motors (1, 1') die erste Einsatzzeit ($\Delta T$) zu jedem aktuellen Zeitpunkt (TPS) durch das Bestimmungsmittel (3) erhalten wird mit Hilfe der folgenden ersten Gleichung

$$\Delta T = \frac{EP2 - \int_{T0}^{TPS} K(t).\delta t}{K2},$$

wobei:

• K2 den angezielten Abnutzungskoeffizienten darstellt,
• EP2 den Totalschaden darstellt, und

• $\int_{T0}^{TPS} K(t).\delta t$ das Integral des Koeffizienten der aktuellen Abnutzung (K(t)) in Abhängigkeit von der Zeit zwischen einem ersten Zeitpunkt (T0), der dem Übergang von der ersten Leistung (P1) zur dritten Leistung (P3) entspricht, und dem aktuellen Zeitpunkt (TPS) darstellt,

- wobei ein Anzeigemittel (4) mit dem Bestimmungsmittel (3) zusammenwirkt, um die erste Einsatzdauer (ΔT) anzuzeigen.

Fig.1

Fig.2

Fig.3

Fig.4

EP 2 423 452 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2878288
- FR 2888287